# EUROPÄISCHE PATENTSCHRIFT

(11) **EP 0 582 224 B1**
(45) Veröffentlichungstag und Bekanntmachung des Hinweises auf die Patenterteilung: **26.02.1997**
(21) Anmeldenummer: 93112184.2
(22) Anmeldetag: 29.07.1993
(51) Int. Cl.: B65G 47/50, B07C 5/38

(54) **Verfahren zum Sortieren**
Sorting method
Procédé de triage

(30) Priorität: 06.08.1992 DE 4226066
(43) Veröffentlichungstag der Anmeldung: 09.02.1994
(73) Patentinhaber: RSL LOGISTIK GMBH & CO, D-86899 Landsberg (DE)
(72) Erfinder: Schönenberger, Rolf, Dipl.-Ing., Wirtsch.-Ing., D-86899 Landsberg/Lech (DE); Enderlein, Robby, D-86899 Landsberg/Lech (DE); Robu, Johann, D-82140 Olching (DE)
(74) Vertreter: Grünecker, Kinkeldey, Stockmair & Schwanhäusser Anwaltssozietät

(56) Entgegenhaltungen:
- DE-A- 2 409 999
- DE-U- 9 106 057

## Beschreibung

Die Erfindung bezieht sich auf ein Verfahren zum Sortieren einer Mehrzahl einzeln geförderter Gegenstände in einer Hängefördereinrichtung.

Sortierverfahren zum Sortieren unterschiedlichster Gegenstände sind in großer Zahl bekannt.

So zeigt beispielsweise die DE-A-2409999 eine Steuerung von Fördergütern, insbesondere Fluggepäck. Die beschriebene Vorrichtung verwendet eine Mehrzahl von Flurförderbändern, auf denen das Gepäck in Paletten abgestellt ist, und die das Fluggepäck von einer Einschleusstelle zum gewünschten Zielort, beispielsweise einem Flugsteig, leitet. Die Steuerung ist so ausgelegt, daß das Fluggepäck von einer Einschleusstelle auf möglichst direktem Weg die Förderer passiert und zum Ziel gelangt. Gruppen von Gegenständen werden auf keinem der Förderer angesammelt. Zwar sind die Förderer als Förderkreise ausgebildet, das Gepäck benutzt jedoch in Richtung auf das Ziel nur ein Trum des Förderkreises. Das Rückführtrum ist lediglich vorhanden, um eventuell fehlgeleitetes Gepack vom Zielort zurück zur Einschleusstelle oder zu einem anderen Förderzweig umzuleiten. Die Förderer sind nicht für einen Umlauf der Gegenstände gedacht. Darüber hinaus weisen alle Förderer eine vorgegebene Laufrichtung auf und sind nicht umschaltbar.

Das DE-U-9106057 beschreibt eine Sortiervorrichtung für Zahnbürsten nach Farbe, die eine Mehrzahl von Förderbändern enthält, die zwar umlaufen, jedoch dabei die Gegenstände nicht umlaufend fördern. Die Vorrichtung enthält ein erstes Förderband, das die Zahnbürsten von der Herstellungsmaschine übernimmt und in Aufnahmehalterungen auf einem zweiten Förderband einschiebt. Von dort werden die Zahnbürsten, nachdem ihre Farbe festgestellt wurde, in ein entsprechendes Abteil auf einen Zwischenförderer eingeschoben, von dem sie wiederum auf ein weiteres Förderband übergeben werden, das die Zahnbürsten nach Farben geordnet zu einer Verpackungsmaschine bringt.

Ein Verfahren zum Sortieren in einer Hängefördereinrichtung ist aus der GB-A-2 079 708 bekannt. Beim bekannten Verfahren werden auf Kleiderbügeln hängende Kleidungsstücke unsortiert und per Hand einzeln auf einen im geschlossenen Förderkreis in einer vorbestimmten Richtung umlaufenden Förderer gehängt. Auf dem Förderer wird jeder einzelne Kleiderbügel durch ein Schnappschloß gehalten, das selbsttätig zu öffnen ist. Der im Kreis laufende Förderer führt an einer Vielzahl von Förderstangen vorbei, die als zweiter Förderweg für jeweils eine Guppe vorbestimmter Gegenstände ausgebildet sind. Zwischen den Rutschstangen und dem Förderkreis sind Abwurfstangen angeordnet, die sich unterhalb der Kleiderbügelhaken befinden und jeden Kleiderbügel auffangen, dessen Schnappschloß oberhalb der Abwurfstange geöffnet wurde. Auf den bekannten, als Stichstrecken ausgebildeten Förderern müssen die Gegenstände jedoch in ihrer vorbestimmten Reihenfolge innerhalb der zusammenzustellenden Gruppe aus dem Förderkreis ausgeschleust werden. Dies bedeutet, daß ein bestimmter eigentlich auf eine bestimmte Rutschstange zu überführender Gegenstand so oft im ersten Förderkreis an seiner Rutschstange vorbeigefördert werden muß, bis alle vor ihm auf seiner Rutschstange anzusammelnden Gegenstände ausgeschleust wurden. Das bekannte Verfahren ist somit recht zeitaufwendig.

Es ist weiterhin als allgemeines Sortierprinzip der sogenannten zugeordneten Kommissionierung bekannt, vorsortierte Artikel durch getakteten Umlauf in einem Förderkreis mit jeweils einem eine bestimmte Gruppe endsortierter Artikel aufnehmenden Fördermittel zusammengebracht werden, das auf einem zweiten Förderkreis ebenfalls getaktet umläuft. Die Übergabe erfolgt jedoch meist per Hand bzw. durch komplizierte Umsetzeinrichtungen und auf keinen Fall aus dem Förderlauf heraus (der Förderer und die Artikelsorte müssen im Takt für jede Übergabe angehalten werden). Darüber hinaus sind damit nur breits vorsortierte Artikel zu übergeben.

Der Erfindung liegt somit die Aufgabe zugrunde, ein schnelles, einfaches und unkompliziertes Verfahren zum Sortieren einer Mehrzahl von einzeln geförderten Gegenständen bereitzustellen.

Die Aufgabe wird durch die in Anspruch 1 enthaltenen Merkmale gelöst.

Durch die erfindungsgemäße Maßnahme, die Fördermittel auch im zweiten Förderweg in einem geschlossenen Umlauf zu führen, können die Gegenstände vom ersten Förderkreis an die jeweils gewünschte Position zwischen die auf dem zweiten Förderkreis umlaufenden Gegenstände überführt werden. Darüber hinaus können auf dem zweiten Förderkreis auch mehrere verschiedene Gruppen von Gegenständen angesammelt werden, ohne daß eine bestimmte Reihenfolge der Gruppen untereinander eingehalten werden muß.

Vorteilhafte Weiterbildungen der Erfindung sind den Unteransprüchen zu entnehmen.

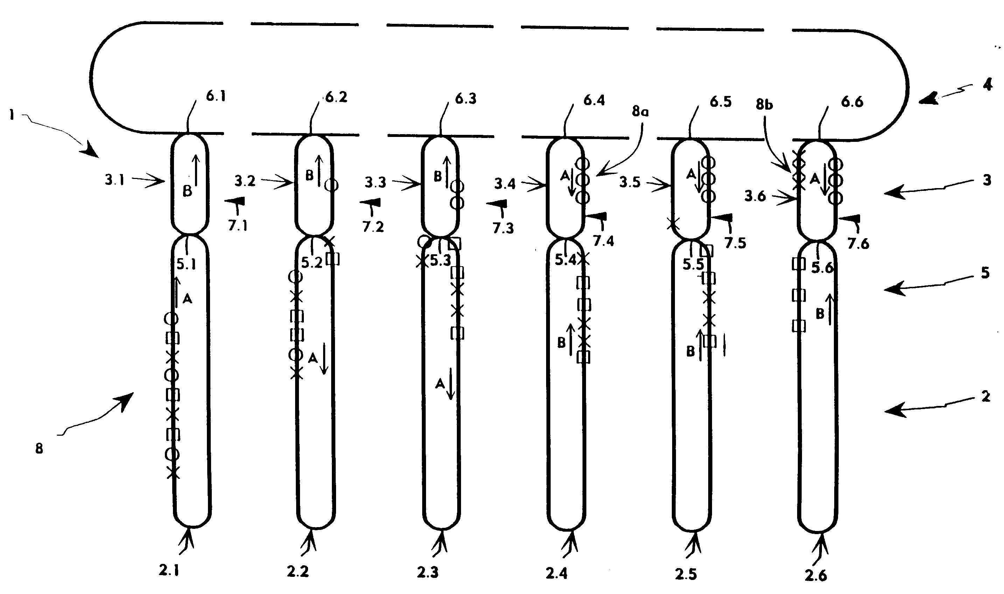

Ein Ausführungsbeispiel der Erfindung wird anhand einer in der einzigen Zeichnung dargestellten Fördereinrichtung näher erläutert.

Die Zeichnung zeigt ein Layout einer Fördereinrichtung 1, wobei lediglich die Förderwege als Striche dargestellt sind. Die Fördereinrichtung ist eine Hängefördereinrichtung, bei der die geförderten Gegenstände einzeln auf ihrem eigenen Fördermittel bewegt werden. Anstelle einzelner Gegenstände können jedoch auch Gruppen von Gegenständen auf jeweils ihrem eigenen Fördermittel gefördert werden, wobei jede Gruppe einzeln und unabhängig von der anderen Gruppe bewegt werden kann.

Die Fördereinrichtung 1 enthält im dargestellten Ausführungsbeispiel sechs erste Förderkreise 2.1, 2.2, 2.3, 2.4, 2.5 und 2.6. Jedem der ersten Förderkreise 2.1 bis 2.6 ist im dargestellten Ausführungsbeispiel jeweils ein zweiter Förderkreis 3.1, 3.2, 3.3, 3.4, 3.5 und 3.6 zugeordnet. Jeder der zweiten Förderkreise 3.1 bis 3.6 wiederum ist einem gemeinsamen Wegförderer 4 zugeordnet.

Jeder der ersten und zweiten Förderkreise 2.1 bis 2.6 bzw. 3.1 bis 3.6 besteht aus jeweils zwei geradlinigen, parallelen Förderstrecken, die über jeweils eine im Bogen geführte Umlenkstelle miteinander verbunden sind. Zwischen jeweils einem ersten Förderkreis 2.1 bis 2.6 und dem ihm zugeordneten, zweiten Förderkreis 3.1 bis 3.6 befindet sich jeweils eine Weiche 5.1, 5.2, 5.3, 5.4, 5.5 und 5.6, die bevorzugt zwischen zwei aneinander anstoßenden Umlenkstellen des ersten und zweiten Förderkreises angeordnet ist. Jeder der zweiten Förderkreise 3.1 bis 3.6 ist analog über eine weitere Weiche 6.1, 6.2, 6.3, 6.4, 6.5, 6.6 mit dem Wegförderer 4 verbunden. Die Weichen 6.1 bis 6.6 verbinden bevorzugt die den Weichen 5 gegenüberliegenden Umlenkstellen der zweiten Förderkreise 3 mit einer geradlinigen Förderstrecke des Wegförderers 4. Der Wegförderer 4 kann, wie dargestellt, ebenfalls als Förderkreis ausgebildet sein oder lediglich eine geradlinige Förderstrecke enthalten.

Die Förderkreise 2 und 3 können unabhängig voneinander und auch mit verschiedenen Geschwindigkeiten jeweils sowohl entlang des Pfeiles A vorwärts als auch entlang des Pfeiles B rückwärts angetrieben werden. Darüber hinaus kann jedem der zweiten Förderkreise ein Stopper 7.1, 7.2, 7.3, 7.4, 7.5 und 7.6 zugeordnet werden, der aus einer wirksamen in eine umwirksame Position bewegbar ist. Schließlich können bekannte Identifizierungseinrichtungen, wie Lesegeräte oder dgl., für alle sich innerhalb der Fördereinrichtung 1 bewegenden Gegenstände 8 vorgesehen sein. Die Identifizierungseinrichtung dient in bekannter Weise über eine nicht gezeichnete, bekannte Steuereinrichtung zum Steuern der Weichen 5 und 6 bzw. des Antriebs der Förderkreise 2 und 3.

Auf den ersten Förderkreisen 2 laufen verschiedenartige Gegenstände 8 unsortiert und mit willkürlicher Reihenfolge um. Zur Vereinfachung der Darstellung werden nur drei Arten von Gegenständen 8 dargestellt, wobei jede Art durch ein eigenes Symbol, einen Kreis, ein Quadrat oder ein Kreuz, gekennzeichnet ist. Es wird angenommen, daß zunächst alle mit einem Kreis gekennzeichneten Gegenstände aussortiert und auf den zweiten Förderkreis 3 übergeben werden sollen.

Zur Vereinfachung der Darstellung zeigen die in der Zeichnung dargestellten sechs Kombinationen aus jeweils einem ersten und zweiten Förderkreis jeweils einen Schritt dieses Sortiervorganges, wobei jedoch klar ist, daß die Gesamtheit der dargestellten Schritte auf jedem Förderkreispaar ausgeführt werden muß, wobei durchaus jeder dieser Schritte auf einem Förderkreispaar zeitgleich mit genau diesem selben Schritt auf dem benachbarten Förderkreispaar durchgeführt werden kann.

Zum Aussortieren der mit dem Kreis gekennzeichneten Gegenstände 8 aus der Menge der unsortiert und willkürlich auf dem ersten Förderkreis 2.1 in Richtung A umlaufenden Gegenstände 8 wird der zugehörige zweite Förderkreis 3.1 in Richtung des Pfeiles B angetrieben, so daS die beiden Förderkreise 2.1 und 3.1 im Bereich der Weiche 5.1 im wesentlichen parallel laufen. Meldet die Identifizierungsvorrichtung, daS an der Weiche 5.1 als nächster Gegenstand 8 ein mit dem Kreis gekennzeichneter Gegenstand ankommt, so wird die Weiche umgeschaltet und leitet den Gegenstand auf den zweiten Förderkreis. Dieser Zustand ist anhand der Förderkreise 2.2 und 3.2 dargestellt. Folgen nach dem überführten Gegenstand mit einem Kreuz oder einem Quadrat gekennzeichnete Gegenstände, so schaltet die Weiche wieder zurück und beläßt diese Gegenstände auf dem ersten Förderkreis 2. Sobald wieder ein mit einem Kreis gekennzeichneter Gegenstand an der Weiche 5 ankommt, wird die Weiche wieder geschaltet und der Gegenstand auf den zweiten Förderkreis 3 übergleitet. Dies wird solange wiederholt, bis sich alle mit einem Kreis gekennzeichente Gegenstände zu einer ersten Gruppe 8a auf dem zweiten Förderkreis 3 versammelt haben. Dieser Zustand ist anhand des Förderkreispaares 2.4, 3.4. dargestellt. Die angesammelte Gruppe von Gegenständen kann entweder sofort auf den Wegförderer 4 ausgeschleust, oder wie nachfolgend beschrieben auf dem staufähigen zweiten Förderer zwischengelagert werden.

Soll auf dem zweiten Förderkreis 3 eine weitere Gruppe 8b von Gegenständen angesammelt werden, so wird zweckmäßigerweise der Stopper 7.4 in den Förderweg der Gruppe 8a auf dem zweiten Förderkreis 3.4 eingeschoben und die Drehrichtung sowohl des ersten Förderkreises 2 als auch des zweiten Förderkreises 3 umgekehrt, so daß nunmehr der erste Förderkreis in Richtung des Pfeiles B und der zweite Förderkreis in Richtung des Pfeiles A umläuft. Durch den Stopper 7 wird die bereits angesammelte Gruppe 8a gegenüber der Bewegung des zweiten Förderkreises 3 in Richtung auf die Weiche 5 zurückgehalten. Damit wird verhindert, daß unbeabsichtigterweise mit einem Kreuz gekennzeichnete Gegenstände zwischen die Gegenstände der ersten Gruppe 8a gelangen. Die Überführung aller mit dem Kreuz gekennzeichneter Gegenstände erfolgt analog der Ansammlung der Gruppe 8a. Schließlich können auch die mit einem Quadrat gekennzeichneten Gegenstände in einer dritten Gruppe 8c entweder auf dem ersten Förderkreis verbleiben oder in analoger Weise auf dem zweiten Förderkreis überführt werden.

Sind die Gruppen 8a, 8b, 8c angesammelt, so können sie über die Weichen 6 auf den Wegförderer 4 ausgeschleust werden. Es ist jedoch auch möglich, die angesammelten Gruppen vom zweiten Förderkreis gruppenweise wieder auf den ersten Förderkreis zurückzuschleusen und dort zu lagern. Auf diese Weise kann die Lagerkapazität entscheidend erweitert bzw. der sonst zusätzlich neben dem Platz für eine Lagereinrichtung noch benötigte Platz für eine Sortiereinrichtung eingespart werden.

Mit dem erfindungsgemäßen Verfahren ist es weiterhin möglich, die Reihenfolge der in den Gruppen 8a bis 8c angesammelten Gegenstände unabhängig von der Reihenfolge dieser Gegenstände auf dem ersten Förderkreis 2 festzusetzen, da die Gegenstände vom ersten Förderkreis auf jeden beliebigen Punkt des zweiten Förderkreises, also auch zwischen zwei bereits angesammelte Gegenstände, übergeben werden können. Bei einer guten Abstimmung der Steuerung zwischen dem ersten und zweiten Förderkreis ist es weiterhin möglich, auf den zweiten Förderkreisen zwei oder mehrere verschiedene Gruppen gleichzeitig anzusammeln, wobei je nach der Art des sich auf dem ersten Förderkreis der Weiche 5 nähernden Gegenstand der zweite Förderkreis an die gewünschte Stelle bewegt wird.

Die für das erfindungsgemäße Verfahren verwendete Fördereinrichtung sollte zumindest für den zweiten Förderkreis, falls dort mehrere Gruppen angesammelt werden sollen, einen staufähigen Förderer enthalten, bei dem der Antrieb ungehindert weiterlaufen kann, selbst wenn durch den Stopper 7 Gegenstände gegenüber der Förderbewegung zurückgehalten werden. Darüber hinaus sollten die sich zwischen den ersten und zweiten Förderkreisen befindende Weichen kurze Schaltzeiten und eine geringe bauliche Länge in Förderrichtung aufweisen, damit der Abstand der auf dem ersten Förderkreis umlaufenden Gegenstände nicht zu groß gewählt werden muß.

In Abwandlung der beschriebenen und gezeichneten Ausführungsbeispiele können jedem ersten Förderkreis eine Mehrzahl zweiter Förderkreise zugeordnet werden, die auf die oben beschriebene Weise beschickt werden. Dabei kann jeder der zweiten Förderkreise einer Gruppe bestimmter Gegenstände zugeordnet werden und die mit dem Stopper vesehene Seite des Förderkreises als Lagerstrecke für diese bestimmten Gegenstände genutzt werden, während alle anderen Gegenstände dem nächsten Förderkreis übergeben werden. Dort werden die Gegenstände einer zweiten Gruppe aussortiert und alle anderen Gegenstände dem übernächsten Förderkreis übergeben, usw. Vor Beginn des Sortiervorgangs wird die gewünschte Reihenfolge der Gruppen nach dem Sortieren festgelegt. Auch kann der zweite Förderkreis direkt als Wegförderer ausgebildet sein.

## Patentansprüche

1. Verfahren zum Sortieren einer Mehrzahl einzeln geförderter Gegenstände (8) in einer Hängefördereinrichtung (1), wobei die Gegenstände (8) unsortiert auf einem ersten Förderkreis (2) vor- und rückwärts umlaufen können, jeweils die zu einer Gruppe gehörenden Gegenstände vom ersten Förderkreis (2) über eine selbsttätig schaltbare Weiche (5) auf einem zweiten Förderkreis (3) übergeben werden, auf dem sie vor- und rückwärts umlaufen können, wobei die Laufrichtung der Gegenstände auf den Förderkreisen (2, 3) so gesteuert wird, daß die Gegenstände auf dem zweiten Förderkreis (3) in vorbestimmter Reihenfolge zu einer Gruppe zusammengestellt werden, und daß die Gruppe über einen Wegförderer (4) ausgeschleust wird.

2. Verfahren nach Anspruch 1, **dadurch gekennzeichnet**, daß auf dem zweiten Förderkreis (3) nacheinander eine Mehrzahl von Gruppen zusammengehörender Gegenstände angesammelt werden.

3. Verfahren nach Anspruch 1 oder 2, **dadurch gekennzeichnet**, daß die Gegenstände einer Gruppe auf dem zweiten Förderkreis (3) angestaut werden und daß anschließend auf diesen zweiten Förderkreis (3) eine weitere Gruppe angesammelt wird.

4. Verfahren nach einem der Ansprüche 1 bis 3, **dadurch gekennzeichnet**, daß jeder auf dem ersten Förderkreis (2) umlaufende Gegenstand (8) gesteuert auf jeweils einen ausgewählten Förderkreis einer Mehrzahl zweiter Förderkreise (3) geleitet wird.

5. Verfahren nach Anspruch 4, **dadurch gekennzeichnet**, daß die auf allen zweiten Förderkreisen (3) angesammelten Gruppen über einen gemeinsamen Wegförderer (4) ausgeschleust werden.

6. Verfahren nach einem der Ansprüche 1 bis 5, **dadurch gekennzeichnet**, daß die angesammelten Gruppen vor dem Ausschleusen über den Wegförderer (4) vom zweiten Förderkreis (3) auf den ersten Förderkreis (2) zurückgeleitet werden.

## Claims

1. A method of sorting a plurality of individually conveyed articles (8) in a suspension-type conveyor means (1), wherein said articles (8) circulate forwards and rearwards in unsorted fashion on a first conveyor circuit (2), the articles that belong to one group are each transferred from said first conveyor circuit (2) via an automatically switchable shunt (5) to a second conveyor circuit (3) on which they can circulate forwards and rearwards, the running direction of said articles on said conveyor circuits (2, 3) being controlled such that said articles are compiled on said second conveyor circuit (3) in predermined order to form a group, and that said group is ejected via a removing conveyor (4).

2. A method according to claim 1, **characterized in** that a plurality of groups of associated articles are collected successively on said second conveyor circuit (3).

3. A method according to claim 1 or 2, **characerized in** that the articles of one group are accumulated on said second conveyor circuit (3) and that a further group is subsequently collected on said second conveyor circuit (3).

4. A method according to any of claims 1 to 3, **characterized in** that each article (8) circulating on said first conveyor circuit (2) is passed in controlled fashion to a a selected conveyor circuit of a plurality of second conveyor circuits (3).

5. A method according to claim 4, **characterized in** that the groups collected on all second conveyor circuits (3) are ejected via a joint removing conveyor (4).

6. A method according to any of claims 1 to 5, **characterized in** that said collected groups are returned from said second conveyor circuit (3) to said first conveyor circuit (2) before being ejected via said removing conveyor (4).

## Revendications

1. Procédé de triage d'une multiplicité d'objets (8) transportés individuellement dans un système de transport aérien (1), les objets (8), non triés, pouvant tourner vers l'avant et vers l'arrière sur un premier carrousel (2), les objets appartenant à un groupe étant respectivement transférés, par le biais d'une aiguille (5) commutable automatiquement, du premier carrousel (2) sur le deuxième carrousel (3), sur lequel ils peuvent tourner vers l'avant et vers l'arrière, et le sens de défilement des objets sur les carrousels (2, 3) étant commandé de sorte que les objets sont regroupés en un groupe sur le deuxième carrousel (3), dans un ordre prédéfini, et que le groupe est éjecté sur un convoyeur d'évacuation (4).

2. Procédé suivant la revendication 1, caractérisé en ce que plusieurs groupes d'objets correspondants sont réunis les uns après les autres sur le deuxième carrousel (3).

3. Procédé suivant l'une des revendications 1 et 2, caractérisé en ce que les objets d'un groupe sont accumulés sur le deuxième carrousel (3), et en ce qu'un autre groupe est ensuite réuni sur ce deuxième carrousel (3).

4. Procédé suivant l'une des revendications 1 à 3, caractérisé en ce que chaque objet (8), tournant sur le premier carrousel (2), est dirigé sous contrôle sur le carrousel respectivement sélectionné d'une multiplicité de deuxièmes carrousels (3).

5. Procédé suivant la revendication 4, caractérisé en ce que les groupes réunis sur tous les deuxièmes carrousels (3) sont éjectés sur un convoyeur d'évacuation commun (4).

6. Procédé suivant l'une des revendications 1 à 5, caractérisé en ce que les groupes réunis sont renvoyés du deuxième carrousel (3) sur le premier (2), avant leur éjection sur le convoyeur d'évacuation (4).
